# FASCICULE DE BREVET EUROPEEN

(11) **EP 0 824 637 B1**
(45) Date de publication et mention de la délivrance du brevet: **06.10.1999**
(21) Numéro de dépôt: 96915078.8
(22) Date de dépôt: 23.04.1996
(51) Int. Cl.: F16D 65/092, F16D 69/00

(54) **PLAQUETTE DE FREIN A DISQUE POUR VEHICULES DE CHEMIN DE FER**
SCHEIBENBREMSBELAG FÜR SCHIENENFAHRZEUGE
RAILWAY VEHICLE BRAKE PAD

(30) Priorité: 24.04.1995 FR 9504874
(43) Date de publication de la demande: 25.02.1998
(73) Titulaire: Flertex S.A., 89600 Saint-Florentin (FR)
(72) Inventeur: SEIDERMANN, Jacques, F-60580 Coye-la-Forêt (FR); MINET, Michel, F-95460 Ezanville (FR); WEICHERT, Dieter, F-95680 Montlignon (FR); BENSEDDIQ, Moureddine, F-59650 Villeneuve-d'Ascq (FR)
(74) Mandataire: CABINET BONNET-THIRION
(86) Numéro de dépôt international: FR9600619
(87) Numéro de publication internationale: WO9634214

(56) Documents cités:
- EP-A- 0 169 998
- EP-A- 0 351 447
- DE-A- 2 353 133
- DE-B- 1 263 526
- FR-A- 2 158 853
- FR-A- 2 681 925
- FR-A- 2 682 443
- US-A- 2 236 311
- US-A- 3 231 058

## Description

La présente invention vise d'une manière générale les plaquettes de frein à disque pour chemin de fer.

Elle vise plus particulièrement celles de ces plaquettes de frein dans lesquelles il est prévu, entre la garniture de friction et le support permettant de rapporter l'ensemble sur un organe fixe du frein à équiper, une sous-couche en matériau à bas module d'élasticité en compression, avec, en creux, à la surface de la garniture de friction, un réseau de rainures s'étendant au moins jusqu'à cette sous-couche.

Une plaquette de frein de ce type se trouve décrite dans la demande de brevet français qui, déposée le 1er octobre 1991 sous le No 91 12042, a été publiée sous le No 2 681 925.

La sous-couche, dont le matériau constitutif a un module d'élasticité en compression inférieur à 1000 daN/cm² en étant préférentiellement de l'ordre de 800 à 900 daN/cm², permet avantageusement à la garniture de friction d'épouser au mieux le disque.

Son effet se trouve renforcé par les rainures de la garniture de friction qui, en subdivisant celle-ci en blocs indépendants, favorisent l'obtention d'un bon contact individuel de chacun de ces blocs sur le disque.

En pratique, la garniture de friction ne comporte usuellement qu'une seule rainure longitudinalement, c'est-à-dire sensiblement parallèlement aux bords circonférentiels de son contour, et elle en comporte usuellement deux transversalement, c'est-à-dire sensiblement perpendiculairement à ces bords circonférentiels.

En pratique, également, et suivant les dispositions normatives en la matière, le contour de la garniture de friction a une forme globalement allongée, sa longueur circonférentielle du côté de son bord circonférentiel externe étant nettement supérieure à sa longueur circonférentielle du côté de son bord circonférentiel interne.

En pratique, enfin, le support de l'ensemble ne s'étend que sur une fraction de la surface de la sous-couche. Ces dispositions donnent globalement satisfaction.

Mais il est apparu, au cours du développement des plaquettes de frein du genre en cause, que des dispositions complémentaires permettaient d'en améliorer les performances.

La présente invention a d'une manière générale pour objets ces dispositions complémentaires.

De manière plus précise, elle a tout d'abord pour objet une plaquette de frein à disque pour chemin de fer du genre comportant une garniture de friction rapportée sur un support par l'intermédiaire d'une sous-couche en matériau à bas module d'élasticité de compression, avec, en creux à la surface de la garniture de friction, un réseau de rainures s'étendant au moins jusqu'à la sous-couche, cette plaquette de frein étant d'une manière générale caractérisée en ce que, en combinaison, d'une part, le réseau de rainures de la garniture de friction comporte longitudinalement au moins deux rainures, et, transversalement, au moins trois, et, d'autre part, le module d'élasticité en compression du matériau constitutif de la sous-couche est compris entre 800 daN/cm² et 100 daN/cm².

Préférentiellement, le réseau de rainures de la garniture de friction comporte longitudinalement au moins trois rainures, et, transversalement, au moins quatre, et, conjointement, le module d'élasticité en compression du matériau constitutif de la sous-couche est par exemple de l'ordre de 250 daN/cm².

Quoi qu'il en soit, le calcul montre, et les essais confirment, que l'augmentation du nombre de rainures de la garniture de friction conjuguée avec un abaissement du module d'élasticité en compression du matériau constitutif de la sous-couche conduit avantageusement, lors d'un freinage, à une homogénéisation des températures à la surface de la garniture de friction, c'est-à-dire, les autres conditions étant égales par ailleurs, à une diminution des écarts de température susceptibles d'être observés en divers points de cette surface.

Grâce à une telle homogénéisation de la température, l'usure de la garniture de friction se trouve globalement diminuée, cette usure n'évoluant pas de manière linéaire avec la température, et étant au contraire relativement faible à des températures relativement basses, de l'ordre par exemple de 400°C, et relativement forte à des températures relativement hautes, de l'ordre par exemple de 700°C.

Conjointement, grâce à cette homogénéisation de la température, le disque se trouve lui-même ménagé : il est moins susceptible de présenter des points chauds de température suffisamment élevée pour être à l'origine de fissurations, et son usure se fait de manière plus uniforme.

Enfin, les performances de l'ensemble sont avantageusement améliorées.

En particulier, il est observé que, à chaque freinage, le coefficient de frottement moyen obtenu est plus élevé, et, donc, que la distance d'arrêt est réduite.

En pratique, avec une plaquette de frein suivant l'invention, un coefficient de frottement moyen de l'ordre de 0,40 à 0,43 est obtenu, alors que, avec une plaquette de frein de type usuel, ce coefficient de frottement moyen est de l'ordre de 0,32 à 0,34 dans les mêmes conditions.

Ces résultats se trouvent renforcés si, suivant un autre objet de l'invention, il est donné au contour de la garniture de friction une forme plus "carrée", c'est-à-dire plus ramassée, caractérisée par des longueurs circonférentielles au quart et aux trois quarts de sa hauteur du même ordre de grandeur que sa longueur circonférentielle à la moitié de celle-ci.

De même, ces résultats se trouvent également renforcés si, suivant un autre objet de l'invention, le support s'étend sensiblement sur toute la surface de la sous-couche.

Les objets de l'invention, leurs caractéristiques et leurs avantages, ressortiront d'ailleurs de la description qui va suivre, à titre d'exemple, en référence aux dessins schématiques annexés sur lesquels :
la figure 1 est une vue en élévation d'une plaquette de frein à disque de type usuel ;
la figure 2 en est une vue en coupe transversale, suivant la ligne II-II de la figure 1 ;
la figure 3 est un diagramme donnant à un instant donné les températures en plusieurs points de la garniture de friction de cette plaquette de frein lors d'un freinage ;
les figures 4, 5, 6 sont des vues analogues à celles des figures 1, 2, 3, pour une plaquette de frein suivant l'invention ;
les figures 7, 8, 9 sont des vues analogues à celles des figures 4, 5, 6, pour une variante de réalisation de la plaquette de frein suivant l'invention.

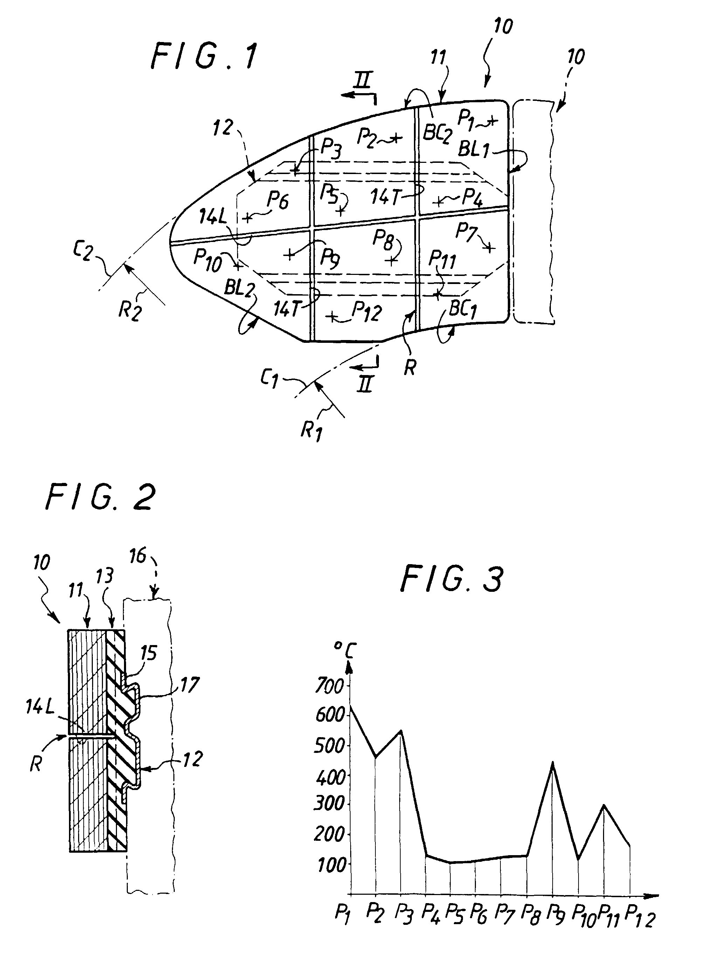

Sur les figures 1 et 2, qui se rapportent à l'art antérieur, on reconnaît une plaquette de frein 10, qui, destinée à l'équipement d'un frein à disque pour chemin de fer, est du type de celle décrite dans la demande de brevet français No 91 12042 mentionnée ci-dessus.

Globalement, cette plaquette de frein 10 comporte une garniture de friction 11 rapportée sur un support 12 par l'intermédiaire d'une sous-couche 13 en matériau à bas module d'élasticité en compression.

Tel que schématisé en traits interrompus sur la figure 1, le contour, en plan, de la garniture de friction 11 s'inscrit globalement entre deux circonférences C1, C2 concentriques, de rayons R1, R2.

Les bords circonférentiels BC1, BC2 correspondants de ce contour suivent au moins localement les circonférences C1, C2.

Le bord circonférentiel BC1, qui correspond à la circonférence C1 de plus petit rayon R1, est le bord circonférentiel radialement le plus interne, et le bord circonférentiel BC2, qui correspond à la circonférence C2 de plus grand rayon R2, est le bord circonférentiel radialement le plus externe.

Conjointement, l'un des bords latéraux, BL1, du contour de la garniture de friction 11 est droit.

Autrement dit, ce bord latéral BL1 s'étend sensiblement suivant un rayon des circonférences C1, C2.

L'autre des bords latéraux, BL2, du contour de la garniture de friction 11 suit, de la circonférence C1 à la circonférence C2, un parcours plus complexe, dont il résulte que la garniture de friction 11 est globalement allongée au voisinage de la circonférence C2 correspondant à son bord circonférentiel BC2 radialement le plus externe, sa longueur circonférentielle au voisinage de cette circonférence C2 étant largement supérieure à sa longueur circonférentielle au voisinage de la circonférence C1.

La garniture de friction 11 est en matériau de frottement.

Préférentiellement, il s'agit d'un matériau de frottement à haut module d'élasticité en compression perpendiculairement à sa surface, c'est-à-dire perpendiculairement à la surface par laquelle elle est destinée à être appliquée à un disque.

Par exemple, le matériau de frottement constitutif de cette garniture de friction 11 a un module d'élasticité en compression E supérieur à 11000 daN/cm².

Par ailleurs, la garniture de friction 11 présente, en creux, à sa surface, un réseau R de rainures 14L, 14T, qui s'étendent au moins jusqu'à la sous-couche 13, et qui, en pratique, entaillent cette sous-couche 13.

En pratique, le réseau R de rainures 14L, 14T comporte, longitudinalement, une seule rainure 14L, qui s'étend sensiblement à mi-hauteur, c'est-à-dire à distance sensiblement égale de l'un et de l'autre des bords circonférentiels BC1, BC2, et, transversalement, deux rainures 14T, qui, parallèles entre elles, et parallèles au bord latéral BL1 droit, sont dûment échelonnées le long de la rainure 14L.

La sous-couche 13 s'étend sur toute la surface de la garniture de friction 11.

Autrement dit, elle a un contour identique à celui de celle-ci.

Le support 12, par contre, ne s'étend que sur une fraction de la surface de la sous-couche 13, dans la zone médiane de celle-ci.

Il comporte, globalement, une semelle 15, et, en saillie sur cette semelle 15, au dos de celle-ci, pour permettre à l'ensemble d'être rapporté sur l'organe fixe 16, partiellement schématisé en traits interrompus sur la figure 2, du frein à équiper, une nervure 17 qui, en pratique, s'étend perpendiculairement au bord latéral BL1 droit de la garniture de friction 11, et dont la section transversale, parallèlement à ce bord latéral BL1 droit, a un profil en queue d'aronde.

Par exemple, et tel que représenté, la semelle 15 est d'un seul tenant avec la nervure 17, l'ensemble étant formé par pliage d'un feuillard métallique, et la sous-couche 13 est ancrée dans le volume creux formé par cette nervure 17.

Corollairement, la garniture de friction 11 est convenablement adhérisée à la sous-couche 13, par exemple par collage ou par moulage simultané.

En pratique le réseau R de rainures 14L, 14T subdivise la garniture de friction 11 en une pluralité de plots indépendants.

Exposées dans la demande de brevet français No 91 12042, les dispositions qui précèdent ne seront pas décrites plus en détail ici.

Tel que schématisé en traits interrompus sur la figure 1, la plaquette de frein 10 est destinée à être jumelée bout à bout avec une autre plaquette de frein 10 de même type, du côté du bord latéral BL1 droit de sa garniture de friction 11, suivant une circonférence du disque concerné.

Le diagramme de la figure 3 donne, en °C, les températures en divers points de mesure P1 à P12 de la surface de la garniture de friction 11 telles que relevées au cours d'un freinage type, ces températures ayant été appréciées au bout d'un temps t donné, de l'ordre par exemple de 15 sec, à compter du début de ce freinage type.

Les points de mesure P1 à P12 ont été dûment repérés sur la figure 1.

Ils sont globalement répartis, sensiblement régulièrement, sur toute la surface de la garniture de friction 11.

Ainsi qu'on le notera, de grands écarts de température sont constatés entre, notamment, d'une part, les points de mesure P4, P5, P6, qui se situent sensiblement à mi-hauteur, et, d'autre part, les points de mesure P1, P2, P3 qui se situent au voisinage du bord circonférentiel BC2 radialement le plus externe.

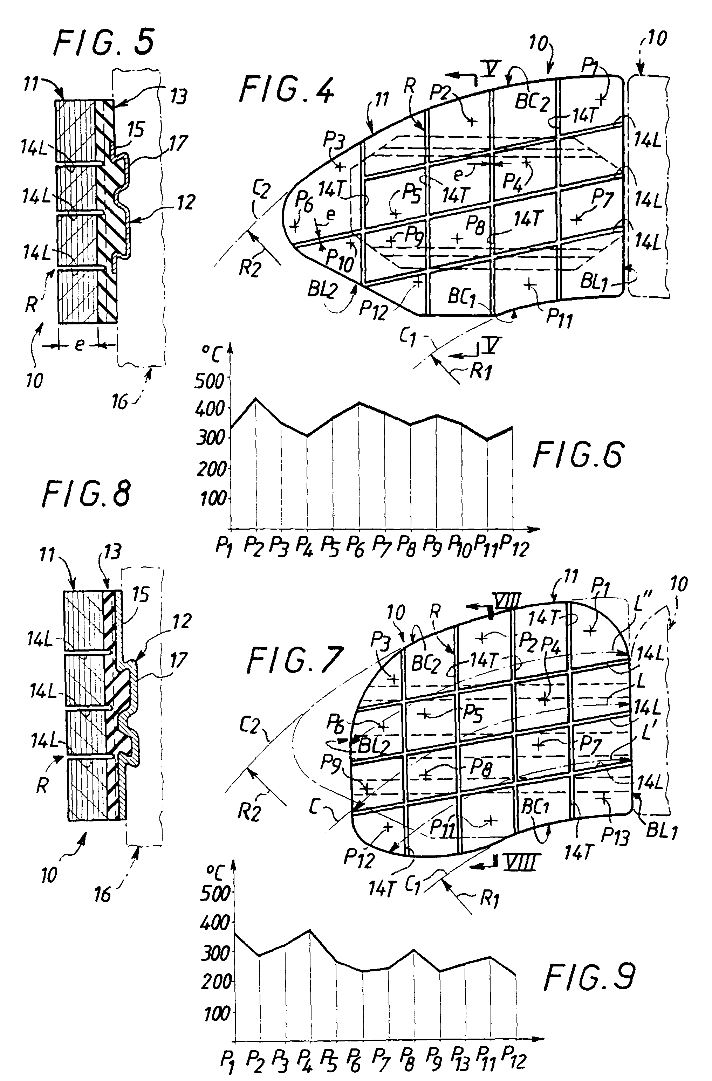

Suivant l'invention, figures 5 à 9, et en combinaison, d'une part, le réseau R de rainures 14L, 14T de la garniture de friction 11 comporte, longitudinalement, au moins deux rainures 14L, et, transversalement, au moins trois rainures 14T, et, d'autre part, le module d'élasticité en compression E du matériau constitutif de la sous-couche 13 perpendiculairement à la surface de la garniture de friction 11 est compris entre 800 daN/cm² et 100 daN/cm².

Préférentiellement, le réseau R de rainures 14L, 14T de la garniture de friction 11 comporte, longitudinalement, au moins trois rainures 14L, et, transversalement, au moins quatre rainures 14T, tel que représenté sur les figures 4 et 7.

De manière usuelle, ces rainures ont des flancs sensiblement plats et rectilignes, à la manière de saignées.

Ces flancs peuvent par exemple être sensiblement parallèles entre eux.

Il peuvent également présenter une légère dépouille, en allant en divergeant l'un par rapport à l'autre du fond des rainures 14L, 14T au débouché de celles-ci.

En pratique, dans les formes de réalisation représentées, seules sont prévues, longitudinalement, trois rainures 14L, et, transversalement, quatre rainures 14T.

Ces diverses rainures 14L, 14T sont sensiblement régulièrement espacées les unes par rapport aux autres, de manière à délimiter entre elles des plots de dimensions sensiblement égales, au moins sur la majeure partie de la surface de la garniture de friction 11.

Par exemple, et tel que représenté, les rainures 14L, qui s'étendent longitudinalement, sont sensiblement disposées au quart, à la moitié et aux trois quarts de la hauteur de la garniture de friction 11 à compter de son bord circonférentiel BC1 radialement le plus interne, et elles sont parallèles entre elles.

De même, les rainures 14T, qui s'étendent transversalement, sont parallèles entre elles, et parallèles au bord latéral BL1 droit, en étant régulièrement échelonnées le long des rainures 14L précédentes.

Comme précédemment, ces rainures 14L, 14T entaillent la sous-couche 13, en sorte qu'elles délimitent dans la garniture de friction 11 des plots indépendants.

Il résulte de ce qui précède que, pour la plupart d'entre eux, et notamment au moins pour ceux qui sont situés dans la zone médiane de la garniture de friction 11, ces plots ont un contour globalement parallélépipédique.

Pour ne pas réduire de trop la surface utile de la garniture de friction 11, les rainures 14L, 14T ont une largeur 1 relativement petite.

Par exemple, cette largeur 1, mesurée au débouché des rainures 14L, 14T, est inférieure au cinquième de l'épaisseur e de la garniture de friction 11 à l'état neuf.

En pratique, elle est ainsi de l'ordre du millimètre.

Corollairement, le module d'élasticité en compression E du matériau constitutif de la sous-couche 13 perpendiculairement à la surface de la garniture de friction 11, est, préférentiellement, de l'ordre de 250 daN/cm².

Le diagramme de la figure 6 donne les températures obtenues, dans les mêmes conditions d'expérimentation que celles précisées à propos du diagramme de la figure 3.

Ainsi qu'on le notera, d'une part, les températures relevées aux points les plus chauds sont plus faibles, et, d'autre part, les écarts de température observés entre les divers points sont beaucoup plus réduits.

Autrement dit, la température à la surface de la garniture de friction 11 se trouve sensiblement homogénéisée.

Des résultats encore meilleurs sont obtenus si, suivant la forme de réalisation représentée sur les figures 4 et 5, les longueurs circonférentielles L', L" de la garniture de friction 11, appréciées au quart et aux trois quarts de sa hauteur à compter de son bord circonférentiel BC1 radialement le plus interne, et mesurées par exemple parallèlement aux circonférences C1, C2, sont du même ordre de grandeur que sa longueur circonférentielle L, appréciée à la moitié de sa hauteur et mesurée dans les mêmes conditions.

Ainsi qu'on le notera sur la figure 7, le contour de la garniture de friction 11 de la plaquette de frein 10 suivant l'invention a alors une forme qui, abstraction faite d'arrondis dans certains de ses angles, est globalement "carrée", les bords latéraux BL1, BL2 de ce contour étant sensiblement parallèles entre eux sur une partie au moins de leur longueur, et, plus précisément, sur une partie au moins de leur longueur de part et d'autre de la circonférence C s'étendant à mi-hauteur pour l'ensemble.

Pour que l'originalité de cette forme "carrée" ressorte mieux sur la figure 7, l'ancien contour, plus allongé, de la garniture de friction 11 a aussi été reproduit, en traits interrompus fins, sur cette figure 7.

Corollairement, dans cette forme de réalisation, le support 12, et plus précisément la semelle 15 que comporte ce support 12, s'étend sur toute la surface de la sous-couche 13, avec une épaisseur accrue, prise sur l'intérieur, nécessaire pour lui conférer une raideur suffisante.

En pratique, enfin, pour l'établissement du diagramme de la figure 9, le point de mesure P10 précédent, anciennement proche du bord latéral BL2, a été remplacé par un point de mesure P13 proche du bord latéral BL1 droit, pour tenir compte de la forme carrée du contour de la garniture de friction 11.

Bien entendu, la présente invention ne se limite pas aux formes de réalisation décrites et représentées, mais englobe toute variante d'exécution et/ou de combinaison de leur divers éléments, notamment en ce qui concerne les rainures de la garniture de friction, qui, tant en ce qui concerne celles qui s'étendent longitudinalement qu'en ce qui concerne celles qui s'étendent transversalement, ne sont pas nécessairement parallèle entre elles, bien que cette disposition conduise à une subdivision de cette garniture de friction en plots d'importance sensiblement égale et que, de ce point de vue, et pour certaines applications au moins, il puisse s'agir d'une disposition avantageuse.

## Revendications

1. Plaquette de frein à disque pour chemin de fer, du genre comportant une garniture de friction (11) rapportée sur un support (12) par l'intermédiaire d'une sous-couche (13) en matériau à bas module d'élasticité en compression (E), avec, en creux à la surface de la garniture de friction (11), un réseau (R) de rainures (14L, 14T) s'étendant au moins jusqu'à la sous-couche (13), caractérisée en ce que, en combinaison, d'une part, le réseau (R) de rainures (14L, 14T) de la garniture de friction (11) comporte longitudinalement au moins deux rainures (14L), et, transversalement, au moins trois rainures (14T), et, d'autre part, le module d'élasticité en compression (E) du matériau constitutif de la sous-couche (13) est compris entre 800 daN/cm² et 100 daN/cm².

2. Plaquette de frein suivant la revendication 1, caractérisée en ce que le réseau (R) de rainures (14L, 14T) de la garniture de friction (11) comporte longitudinalement au moins trois rainures (14L), et, transversalement, au moins quatre rainures (14T).

3. Plaquette de frein suivant l'une quelconque des revendications 1, 2, caractérisée en ce que les rainures (14L, 14T) de la garniture de friction (11) sont sensiblement régulièrement espacées les unes par rapport aux autres.

4. Plaquette de frein suivant l'une quelconque des revendications 1 à 3, caractérisée en ce que les rainures (14L) de la garniture de friction (11) qui s'étendent longitudinalement sont parallèles entre elles, et il en est de même pour les rainures (14T) qui s'étendent transversalement.

5. Plaquette de frein suivant l'une quelconque des revendications 1 à 4, caractérisée en ce que les rainures (14L, 14T) de la garniture de friction (11) ont des flancs sensiblement plats.

6. Plaquette de frein suivant l'une quelconque des revendications 1 à 5, caractérisée en ce que les rainures (14L, 14T) de la garniture de friction (11) ont des flancs sensiblement rectilignes.

7. Plaquette de frein suivant l'une quelconque des revendications 1 à 6, caractérisée en ce que, au moins dans la zone médiane de la garniture de friction (11), les plots que délimitent les rainures (14L, 14T) ont un contour globalement parallélépipédique.

8. Plaquette de frein suivant l'une quelconque des revendications 1 à 7, caractérisée en ce que les rainures (14L, 14T) de la garniture de friction (11) entaillent la sous-couche (13).

9. Plaquette de frein suivant l'une quelconque des revendications 1 à 8, caractérisée en ce que le module d'élasticité en compression (E) du matériau constitutif de la sous-couche (13) est de l'ordre de 250 daN/cm².

10. Plaquette de frein suivant l'une quelconque des revendications 1 à 9, caractérisée en ce que, le contour de la garniture de friction (11) s'inscrivant globalement entre deux circonférences (C1, C2) concentriques, les longueurs circonférentielles (L', L") de cette garniture de friction (11) au quart et aux trois quarts de sa hauteur à compter de son bord circonférentiel (BC1) radialement le plus interne sont du même ordre de grandeur que sa longueur circonférentielle (L) à la moitié de sa hauteur.

11. Plaquette de frein suivant la revendication 10, caractérisée en ce que les bords latéraux (BL1, BL2) du contour de la garniture de friction (11) sont sensiblement parallèles entre eux sur une partie au moins de leur longueur de part et d'autre de la circonférence (C) s'étendant à mi-hauteur.

12. Plaquette de frein suivant l'une quelconque des revendications 1 à 11, caractérisée en ce que le support (12) s'étend sensiblement sur toute la surface de la sous-couche (13).

## Patentansprüche

1. Scheibenbremsbelag für eine Eisenbahn mit
einem Reibbelag (11), der an einem Träger (12) mittels einer Zwischenschicht (13) aus einem Material mit einem niedrigen Druck-Elastizitätsmodul (E) befestigt ist, wobei ein Netz (R) aus Spalten (14L, 14T) in der Oberfläche des Reibbelags (11) vertieft ausgebildet ist, welches sich wenigstens bis zur Zwischenschicht (13) erstreckt,
dadurch gekennzeichnet, daß
in Kombination einerseits das Netz (R) aus Spalten (14L, 14T) des Reibbelags (11) wenigstens zwei in Längsrichtung verlaufende Spalten (14L) und wenigstens drei in Querrichtung verlaufende Spalten (14T) umfaßt und andererseits der Druck-Elastizitätsmodul (E) des die Zwischenschicht (13) bildenden Materials zwischen 800 daN/cm² und 100 daN/cm² beträgt.

2. Scheibenbremsbelag nach Anspruch 1, dadurch gekennzeichnet, daß das Netz (R) aus Spalten (14L, 14T) des Reibbelags (11) wenigstens drei in Längsrichtung verlaufende Spalten (14L) und wenigstens vier in Querrichtung verlaufende Spalten (14T) umfaßt.

3. Scheibenbremsbelag nach Anspruch 1 oder 2, dadurch gekennzeichnet, daß die Spalten (14L, 14T) des Reibbelags (11) in Bezug zueinander weitgehend gleichmäßig voneinander beabstandet angeordnet sind.

4. Scheibenbremsbelag nach einem der Ansprüche 1 bis 3, dadurch gekennzeichnet, daß die Spalten (14L) des Reibbelags (11), die sich in Längsrichtung erstrecken, zueinander parallel angeordnet sind und das Gleiche für die sich in Querrichtung erstreckenden Spalten (14T) gilt.

5. Scheibenbremsbelag nach einem der Ansprüche 1 bis 4, dadurch gekennzeichnet, daß die Spalten (14L, 14T) des Reibbelags (11) weitgehend ebene bzw. glatte Seitenwände aufweisen.

6. Scheibenbremsbelag nach einem der Ansprüche 1 bis 5, dadurch gekennzeichnet, daß die Spalten (14L, 14T) des Reibbelags (11) weitgehend geradlinige Seitenwände aufweisen.

7. Scheibenbremsbelag nach einem der Ansprüche 1 bis 6, dadurch gekennzeichnet, daß wenigstens im mittleren Bereich des Reibbelags (11) die Kontaktstellen, welche die Spalten (14L, 14T) abgrenzen, im ganzen genommen die Kontur eines Parallelflächners aufweisen.

8. Scheibenbremsbelag nach einem der Ansprüche 1 bis 7, dadurch gekennzeichnet, daß die Spalten (14L, 14T) des Reibbelags (11) die Zwischenschicht (13) einschneiden.

9. Scheibenbremsbelag nach einem der Ansprüche 1 bis 8, dadurch gekennzeichnet, daß der Druck-Elatizitätsmodul (E) des die Zwischenschicht (13) bildenden Materials in der Größenordnung von 250 daN/cm² liegt.

10. Scheibenbremsbelag nach einem der Ansprüche 1 bis 9, dadurch gekennzeichnet, daß
die Kontur des Reibbelags (11) im Ganzen genommen zwischen zwei konzentrischen Kreisumfängen (C1, C2) eingetragbar ist, wobei die Umfangslängen (L',L'') dieses Reibbelags (11) im ersten und dritten Viertel von dessen Höhe, ausgehend vom radial innen gelegenen Umfangsrand (BC1), die gleiche Größenordnung wie die Umfangslänge (L) in der Mitte der Höhe besitzen.

11. Scheibenbremsbelag nach Anspruch 10, dadurch gekennzeichnet, daß die seitlichen Ränder (BL1, BL2) der Kontur des Reibbelags (11) untereinander weitgehend parallel verlaufen, und zwar wenigstens über einen Bereich Ihrer Länge beidseitig eines sich auf halber Höhe erstreckenden Kreisumfangs (C).

12. Scheibenbremsbelag nach einem der Ansprüche 1 bis 11, dadurch gekennzeichnet, daß sich der Träger (12) weitgehend über die gesamte Oberfläche der Zwischenschicht (13) erstreckt.

## Claims

1. A railway disk brake pad of the kind including a friction facing (11) attached to a support (12) via a sub-layer (13) of a material having a low modulus of elasticity (E) in compression with a network (R) of grooves (14L, 14T) recessed into the surface of the friction facing (11) extending at least as far as the sub-layer (13), characterized in that the network (R) of grooves (14L, 14T) of the friction facing (11) includes at least two longitudinal grooves (14L) and at least three transverse grooves (14T) and the modulus of elasticity (E) in compression of the material of the sub-layer (13) is between 800 daN/cm² and 100 daN/cm².

2. The brake pad according to claim 1 characterized in that the network (R) of grooves (14L, 14T) of the friction facing (11) includes at least three longitudinal grooves (14L) and at least four transverse grooves (14T).

3. The brake pad according to claim 1 or claim 2 characterized in that the grooves (14L, 14T) in the friction facing (11) are substantially regularly spaced relative to each other.

4. The brake pad according to any one of claims 1 to 3 characterized in that the longitudinal grooves (14L) of the friction facing (11) are parallel to each other as are the transverse grooves (14T).

5. The brake pad according to any one of claims 1 to 4 characterized in that the grooves (14L, 14T) of the friction facing (11) have substantially flat flanks.

6. The brake pad according to any one of claims 1 to 5 characterized in that the grooves (14L, 14T) in the friction facing (11) have substantially rectilinear flanks.

7. The brake pad according to any one of claims 1 to 6 characterized in that the blocks delimited by the grooves (14L, 14T) have a globally parallelepiped-shape contour, at least in the middle area of the friction facing (11).

8. The brake pad according to any one of claims 1 to 7 characterized in that the grooves (14L, 14T) in the friction facing (11) cut into the sub-layer (13).

9. The brake pad according to any one of claims 1 to 8 characterized in that the modulus of elasticity (E) in compression of the material of the sub-layer (13) is in the order of 250 daN/cm².

10. The brake pad according to any one of claims 1 to 9 characterized in that, the contour of the friction facing (11) being globally inscribed between two concentric circumferences (C1, C2), the circumferential lengths (L', L") of the friction facing (11) at one-quarter and at three-quarters of its height from its radially innermost circumferential edge (BC1) are in the same order of magnitude as its circumferential length (L) at one-half of its height.

11. The brake pad according to claim 10 characterized in that the lateral edges (BL1, BL2) of the contour of the friction facing (11) are substantially parallel to each other over at least a portion of their length on either side of the mid-height circumference (C).

12. The brake pad according to any one of claims 1 to 11 characterized in that the support (12) extends over substantially all of the surface of the sub-layer (13).
